# EUROPÄISCHE PATENTSCHRIFT

(11) **EP 3 106 689 B1**
(45) Veröffentlichungstag und Bekanntmachung des Hinweises auf die Patenterteilung: **16.09.2020**
(21) Anmeldenummer: 16174331.5
(22) Anmeldetag: 14.06.2016
(51) Int. Cl.: F16C 19/36, F16C 19/38, F16C 33/58, F16C 33/64

(54) **LAGERRING MIT HALTEBORD**
BEARING RING COMPRISING RETAINING LIP
ANNEAU DE STOCKAGE COMPRENANT UN BORD DE RETENUE

(30) Priorität: 16.06.2015 DE 102015211062
(43) Veröffentlichungstag der Anmeldung: 21.12.2016
(73) Patentinhaber: Aktiebolaget SKF, 41 550 Göteborg (SE)
(72) Erfinder: Wagner, Gerhard, 97357 Prichsenstadt (DE); Sticht, Martina, 97526 Sennfeld (DE)
(74) Vertreter: Kuhstrebe, Jochen

(56) Entgegenhaltungen:
- EP-A1- 3 212 950
- WO-A1-2004/099637
- JP-A- 2014 001 800
- US-A- 2 071 628

## Beschreibung

Die vorliegende Erfindung betrifft einen Lagerring gemäß dem Oberbegriff des Anspruchs 1, sowie ein Wälzlager mit einem derartigen Lagerring.

Allgemein weisen Lagerinnen- und Lageraußenringe eines Wälzlagers jeweils eine Lauffläche zum Anordnen von Wälzkörpern auf. Dabei können die Lagerringe axial angeordnete Borde, sog. Halte- und/oder Führungsborde, aufweisen, wobei der Haltebord bei der Lagermontage und/oder beim Transport zur Abstützung der Wälzkörper eine Rolle spielt, und der Führungsbord der axialen Wälzkörperführung, insbesondere im Betrieb des Lagers, dient. Die Halte- und/oder Führungsborde sind hierbei axial neben der Lauffläche des Lagerringes angeordnet und begrenzen die axiale Erstreckung der Lauffläche. Die Wälzkörper sind bei einem Zylinderrollenlager als zylindrische Wälzkörper und bei einem Kegelrollenlager oder als kegelstumpfartige, konische Wälzkörper ausgebildet. Der Haltebord und/oder Führungsbord dient hierbei der axialen Abstützung der Wälzkörper, welche mit einer ihrer axialen Stirnseiten sich am jeweiligen zugewandten Bord abstützen können. Die Erfindung bezieht sich im Folgenden auf Lageringe, welche bezüglich ihres gesamten Umfanges einteilig ausgebildet sind, wie z.B. in WO 2004/099637 A1 offenbart.

Aus dem Stand der Technik ist es bekannt, die Lauffläche der Lagerringe induktiv zu härten, um diesen eine ausreichende Härte und Festigkeit gegenüber mechanischen Beanspruchungen, wie beispielsweise Verformungen durch Zug oder Druck, zu verleihen. Dabei basiert das Induktionshärten als Verfahren zur Einstellung bestimmter Randschichteigenschaften auf einer Gefügeumwandlung infolge materialspezifischer thermischer Behandlungen und lässt sich im Allgemeinen in ein Aufheizen oberhalb der Austenitisierungstemperatur und gegebenenfalls in ein sich anschließendes Abschrecken unterhalb der Martensit-Starttemperatur einteilen. Dadurch kommt es in einer Außenschicht, beispielsweise der Lauffläche eines Lagerrings, zu einer Umwandlung in ein Austenitgefüge, während im Innenbereich das initiale Ausgangsgefüge verbleibt. Aufgrund der Bearbeitung lediglich partieller Flächen sowie aufgrund einer guten Steuerung der Härtewerte und des Härteverlaufs findet das Induktionshärten immer häufiger Einsatz.

Nachteilig ist jedoch, dass es im Zuge des Induktionsprozesses zu einer thermisches Ausdehnung des Materials kommt, die insbesondere im Bereich des Haltebords kritisch ist, da der Haltebord und/oder die dem Haltebord benachbarte Lagerringschulter in der Regel nicht gehärtet wird und dementsprechend nicht erwärmt wird, so dass in diesem Bereich besonders große Spannungen auftreten, die zu unerwünschten Rissbildungen führen können. Insbesondere bei Lagerringen von Kegelrollenlagern mit einem über die Breite bezüglich der Materialstärke stark unterschiedlichem Querschnitt, und damit stark unterschiedlicher Erwärmung des Ringes durch den Induktionsprozess, können Rissbildungen auftreten. Je größer der Winkel ist, welchen die Laufbahn bezüglich der Drehachse bildet, desto mehr nimmt die Materialstärke über die Breite des Ringes zu.

Aufgabe der vorliegenden Erfindung ist es deshalb, einen Lagerring bereitzustellen, bei dem es möglich ist, die Laufflächen des Lagerrings problemlos einem Induktionshärteverfahren zu unterziehen sowie ein Wälzlager mit einem derartigen Lagerring.

Diese Aufgabe wird durch einen Lagerring nach Anspruch 1, sowie durch ein Wälzlager nach Anspruch 10 gelöst.

Im Folgenden wird ein Lagerring eines Wälzlagers vorgestellt, der eine Lauffläche für Wälzkörper und zumindest einen in eine Lagerringschulter übergehenden Bord der sich mit einer Höhe H über die Lauffläche erhebt, aufweist. Dabei handelt es sich bei dem Bord vorzugsweise um einen Haltebord. Da der Haltebord nur zu Montagezwecken und/oder als Transportsicherung dient, bleibt der Haltebord im Allgemeinen ungehärtet. Wenn auch bevorzugt für den Haltebord, können alle folgenden genannten Merkmale gleichermaßen auch bei einem Führungsbord eingesetzt werden. Vorzugsweise handelt es sich bei dem Wälzlager um ein Kegelrollenlager, wobei die Lauffläche gegenüber der Drehachse des Lagers einen Winkel zwischen 10 Grad und 60 Grad aufweist und die Lagerringschulter im Wesentlichen zylindrisch um die Drehachse ausgebildet ist. Damit wird zwischen der Lagerringschulter und der Lauffläche ein Winkel zwischen 100 Grad und 150 Grad gebildet. Höchstvorzugsweise handelt es sich bei dem Wälzlager um ein zweireihiges Kegelrollenlager in O-Anordnung, wobei der erfindungsgemäße Lagerring als Innenring ausgebildet ist.

Um einer Rissbildung beim Induktionshärten aufgrund von thermischen Spannungen im Bereich des insbesondere nicht induktiv behandelten Bords vorzubeugen, wird vorgeschlagen, zwischen der Lagerringschulter und dem Bord einen Freiraum auszubilden, der derart ausgestaltet ist, dass der Bord über seine gesamte Höhe H freistehend ausgebildet ist. Durch den erfindungsgemäß freistehenden Bord wird ermöglicht, dass sich der freistehende Bord beim Induktionshärten thermisch ausdehnen kann, wodurch einer Rissbildung entgegengewirkt wird. Vorzugsweise ist hierbei der Freiraum als Vertiefung ausgebildet, deren Tiefe T derart gewählt ist, dass der Bord über seine gesamte Höhe H freistehend ausgebildet ist. Als freistehender Bord ist hierbei ein Bord definiert, welcher auf seiner gegenüber der Lauffläche angeordneten Bordseite eine Höhe aufweist, die mindestens so groß ist, wie die Höhe auf der der Lauffläche zugewandten Seite des Bordes. Die Höhen werden jeweils senkrecht zur Lauffläche, beziehungsweise auf der der Lauffläche abgewandten Seite senkrecht zu einer gedachten Verlängerung der Lauffläche gemessen.

Die Vertiefung zur Realisierung des freistehenden Bords kann prinzipiell auf zweierlei Weise dargestellt sein. Zum einen kann sie durch eine umlaufende Nut zwischen der Lagerringschulter und dem Bord dargestellt werden. Hierdurch ist es möglich den Radius R1 der zylindrischen Außenumfangsfläche der Lagerringschulter unabhängig vom Radius der Lauffläche festzulegen. Der Radius R1 der Lagerringschulter kann hierbei gleich oder sogar größer sein als der Radius der Lauffläche an ihrem kleinsten Durchmesser, bezüglich der Drehachse. Zum anderen kann die Vertiefung zur Realisierung des erfindungsgemäß freistehenden Bords auch dadurch erreicht werden, dass der Radius der zylindrischen Außenumfangsfläche der Lagerringschulter R1 so gewählt wird, dass er im Wesentlichen kleiner oder gleich groß dem Radius R2 eines Fußpunktes des freistehenden Bordes auf der der Lauffläche gegenüberliegenden Seite ist. Damit erstreckt sich die Vertiefung über die gesamte Breite der Lagerringschulter. Hierdurch wird ein freistehender Bord erzielt, ohne dass zwischen der Lagerringschulter und dem Bord eine zusätzliche Nut angeordnet ist. Als freistehender Bord ist ein die Lauffläche begrenzender umlaufender Bord definiert welcher auf der der Lauffläche abgewandten Seite eine Höhe aufweist die mindestens so groß ist wie die Höhe H des Bordes auf der der Lauffläche zugewandten Seite. Die Höhe wird hierbei jeweils senkrecht zur Lauffläche, beziehungsweise einer gedachten Verlängerung der Lauffläche bis zum höchsten Punkt des Bordes bezüglich der Ebene der Lauffläche gemessen. Die Breite des Bordes, gemessen parallel zur Lauffläche kann hierbei im Wesentlichen konstant sein aber auch in die Höhe hin abnehmen.

In der Ausgestaltung der Vertiefung als Nut, ist diese nicht nur als Freistich ausgebildet, sondern erstreckt sich vorzugsweise deutlich bis in einen Bereich unterhalb der Lauffläche und der Lagerringschulter, so dass die Lagerringschulter einen ersten radialen Abstand zu einer Drehachse des Lagerrings aufweist, und die Vertiefung eine tiefe Stelle aufweist, die einen zweiten radialen Abstand zu der Drehachse hat, wobei ein Unterschied zwischen dem ersten radialen Abstand und dem zweiten radialen Abstand größer ist als die Höhe H des Bords. Dabei ist bei einer Ausbildung des Lagerrings als Lagerinnenring der zweite radiale Abstand kleiner als der erste radiale Abstand ausgebildet, während bei einer Ausbildung des Lagerrings als Lageraußenring der zweite radiale Abstand größer als der erste radiale Abstand ausgebildet ist. Weiterhin ist vorteilhaft, wenn die Tiefe T, senkrecht zu der Lauffläche gemessen von einer tiefsten Stelle der Vertiefung bis zu der maximalen Höhe H des Bords, mehr als das Eineinhalbfache, vorzugsweise mehr als das Doppelte der Höhe H beträgt. Alternativ sieht eine besonders vorteilhafte Ausgestaltung der Nut vor, dass die tiefste Stelle der Nut bezüglich einer Parallelen der Lauffläche tiefer als die Randschichthärtetiefe der Laufbahn liegt. Die Randschichthärtetiefe ist hierbei so definiert, dass die Härte in dieser Tiefe unter der Laufflächenoberfläche noch 80% der Härte der Laufflächenoberfläche aufweist. Dadurch ist eine besonders gute thermische Ausdehnung des Bords ermöglicht.

Gemäß einem weiteren bevorzugten Ausführungsbeispiel erstreckt sich die Vertiefung im Wesentlichen senkrecht zur Lauffläche des Lagerrings. Dadurch können die beim Induktionsverfahren erzeugten thermischen Spannungen besonders effektiv reduziert werden, da die Vertiefung eine thermische Ausdehnung des Bords in Richtung Lageringschulter ermöglicht.

In einem weiteren vorteilhaften Ausführungsbeispiel weist die Vertiefung eine erste und eine zweite Vertiefungswand auf, die im Wesentlichen parallel zueinander ausgebildet sind. Die Vertiefung lässt sich dadurch in einfacher Weise, beispielsweise mittels Drehen, in den Lagerring einarbeiten. Generell können die erste und die zweite Vertiefungswand aber auch nicht parallel zueinander ausgebildet sein, sondern beispielsweise eine Kegelform aufweisen.
Gemäß einem weiteren vorteilhaften Ausführungsbeispiel ist die Vertiefung als umfängliche Nut ausgebildet. Dadurch lässt sich die Vertiefung in einfacher Weise in den Lagerring einarbeiten.
Alternativ oder zusätzlich kann, wie bereits zuvor erwähnt, neben dem Haltebord auch ein Führungsbord an dem Lagerring vorgesehen sein. Statt oder zusätzlich zu dem Haltebord kann auch der Führungsbord, wie oben beschrieben, freistehend ausgebildet sein. Dadurch können Induktoren eingesetzt werden, die lediglich die Lauffläche des Lagerrings härten.

Besonders vorteilhaft ist, wenn die Lauffläche einen Winkel zwischen 130 Grad und 140 Grad mit der Lagerringschulter bildet. Wie bereits eingangs ausgeführt, ist der freistehende Haltebord umso vorteilhafter, je unsymmetrischer die Materialverteilung über den Querschnitt des Lagerringes ist.
Gemäß einem höchst vorteilhaften Ausführungsbeispiel ist vorgesehen, dass der Lagerring einen weiteren Bord aufweist, welcher als Führungsbord für Kegelrollen ausgebildet ist und dass die Lauffläche und der Führungsbord des Lagerringes eine induktiv gehärtete Oberfläche aufweist. Hierdurch wird erreicht, dass lediglich die Bereiche des Lagerringes, welche im Betrieb des Wälzlagers mit den Wälzkörpern in direktem Kontakt stehen, eine induktiv gehärtete Oberfläche aufweisen. Die Lagerringschulter ist vorzugsweise nicht induktiv gehärtet. Der Haltebord kann gegebenenfalls prozessbedingt induktiv mitgehärtet werden.
Ein weiterer Aspekt betrifft ein Kegelrollenlager mit zumindest zwei Lagerringen wobei die Lagerringe als Innenringe ausgebildet sind und mit den Stirnseiten ihrer Lagerringschultern aneinander liegen. Hierdurch kann besonders vorteilhaft eine zweireihige Lageranordnung in O-Anordnung dargestellt werden, wobei über die Breite der Lagerringschultern der Abstand der beiden Wälzkörperreihen bestimmt werden kann.

Weitere Vorteile und vorteilhafte Ausführungsformen sind in den Unteransprüchen, der Beschreibung und der Zeichnung angegeben. Dabei ist eine Kombination der Merkmale in der Beschreibung sowie in der Zeichnung rein exemplarisch und es ist für den Fachmann klar, dass die Merkmale, nicht zwangsläufig in der angegebenen Kombination vorliegen müssen, sondern auch einzeln oder anders miteinander kombiniert vorliegen können, ohne dass dadurch der Rahmen der Erfindung überschritten wird.

Im Folgenden wird das Prinzip der Erfindung anhand von in den Zeichnungen dargestellten Ausführungsbeispielen näher beschrieben. Die Ausführungsbeispiele sind dabei rein exemplarischer Natur und sollen nicht den Rahmen der Erfindung festlegen. Dies gilt insbesondere für in Kombination dargestellte Merkmale, die im Rahmen der vorliegenden Erfindung auch als einzeln stehende Merkmale realisiert werden können. Der Schutzbereich der Anmeldung ist allein über die anhängigen Ansprüche definiert.

Es zeigen:
Fig. 1: eine schematische Querschnittsansicht durch einen Lagerring gemäß einer erfindungsgemäßen ersten Ausführungsform.
Fig. 2: eine schematische Querschnittsansicht durch einen Lagerring gemäß einer erfindungsgemäßen zweiten Ausführungsform.

Im Folgenden werden gleiche bzw. gleichartige Elemente mit den gleichen Bezugszeichen gekennzeichnet.

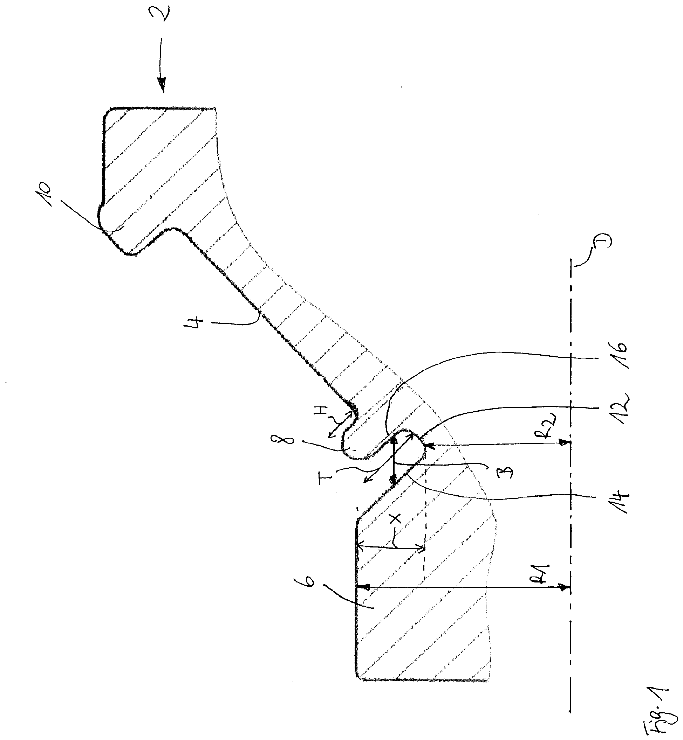

Fig. 1 zeigt eine schematische Querschnittsansicht durch einen Lagerring 2, der eine Lauffläche 4 aufweist, auf der Wälzkörper (nicht gezeigt) angeordnet werden können. Weiterhin weist der Lagerring 2 einen in eine Lagerringschulter 6 übergehenden Haltebord 8 und einen Führungsbord 10 auf, wobei sich insbesondere der Haltebord 8 mit einer Höhe H über die Lauffläche 4 des Lagerrings 2 erhebt. Dabei kann es sich bei der Lagerringschulter 6 und dem Haltebord 8 um nicht zu härtende Randbereiche des Lagerrings 2 handeln, wohingegen die Lauffläche 4 und der Führungsbord 10 vorzugsweise induktiv gehärtet werden.

Wie Fig. 1 weiterhin zeigt, ist der Haltebord 8 freistehend ausgebildet und weist zwischen Lagerschulter 6 und Haltebord 8 einen Freiraum 11 aus, welcher hier vorzugsweise als umfängliche Nut ausgebildete Vertiefung 12 mit einer Tiefe T und einem Breite B ausgebildet ist. Dabei wird die Tiefe T der Vertiefung 12 senkrecht zu der Lauffläche von der maximalen Höhe H bis zu einer tiefsten Stelle der Vertiefung 12 bestimmt, und ist, wie Fig. 1 zu entnehmen, derart dimensioniert, dass sie sich deutlich in einen Bereich unterhalb der Lauffläche 4 und der Lagerringschulter 6 erstreckt. Dabei ist insbesondere bevorzugt, wenn die Tiefe T derart gewählt ist, dass sie in etwa doppelt so groß wie die Höhe H ausgebildet ist. Aufgrund der dadurch entstehenden freistehenden Ausgestaltung kann sich der Haltebord 8 während eines Induktionsverfahrens thermisch ausdehnen, so dass Spannungen im diesem Bereich reduziert werden können und eine Rissbildung vermieden werden kann. Somit ist es möglich die Lauffläche 4 und/oder den Führungsbord 10 induktiv zu härten, und die mit dem Induktionsverfahren einhergehenden Vorteile zu nutzen.

Weiterhin zeigt Fig. 1, dass die Lagerringschulter 6 einen ersten radialen Abstand R1 und die Vertiefung 12 einen zweiten radialen Abstand R2 zu einer Drehachse D des Lagerrings 2 aufweist, wobei vorzugsweise ein Unterschied X zwischen dem ersten radialen Abstand R1 und dem zweiten radialen Abstand R2 größer ist als die Höhe H des Haltebords 8, so dass eine besonders ausgedehnte Freistellung des Haltebords und damit eine besonders effektive thermische Ausdehnung ermöglicht werden kann.

Weiterhin zeigt Fig. 1, dass sich die Vertiefung 12 im Wesentlichen senkrecht zur Lauffläche 4 des Lagerrings 2 erstreckt. Auch dadurch können die beim Induktionsverfahren erzeugten Spannungen besonders effektiv reduziert werden.

Die Vertiefung 12 weist, wie in Fig. 1 weiterhin dargestellt, eine erste und eine zweite Vertiefungswand 14; 16 auf, die im Wesentlichen parallel zueinander ausgebildet sind. Dadurch lässt sich die Vertiefung in einfacher Weise, beispielsweise mittels Drehen, in den Lagerring 2 einarbeiten. Generell ist es jedoch auch möglich die Vertiefungswände 14; 16 anders, beispielsweise konisch, auszubilden.

Alternativ oder zusätzlich kann statt des Haltebords 8 auch der Führungsbord 10 die oben aufgeführten Merkmale aufweisen. Dadurch können Induktoren eingesetzt werden, die lediglich die Lauffläche 4 des Lagerrings 2 härten.

Insgesamt kann aufgrund der Ausbildung einer Vertiefung zwischen einer Lagerringschulter und einem Bord, insbesondere einem Haltebord, ein Lagerring für ein Wälzlager bereitgestellt werden, der einen in Bezug auf die Lagerringschulter freistehenden Bord aufweist. Dadurch ist eine im Zuge eines Induktionsverfahrens auftretende thermische Ausdehnung des Bords möglich, so dass Spannungen, und daraus resultierende Rissbildungen, in diesem Bereich reduziert werden können.

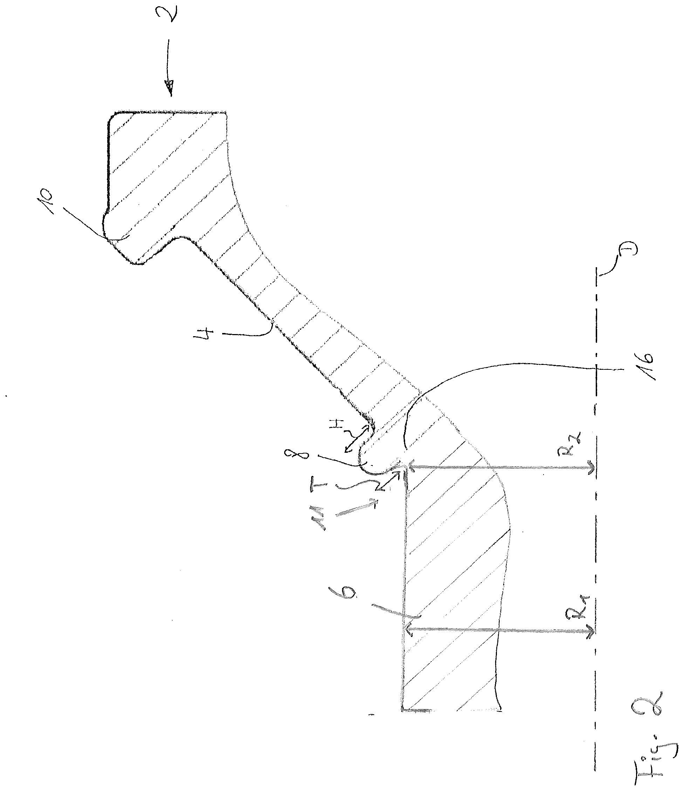

In Figur 2 ist eine schematische Querschnittsansicht durch einen weiteren erfindungsgemäßen Lagerring 2 abgebildet. Hierbei sind gleiche Teile der Lagerringe der Figuren 1 und 2 mit identischen Bezugszeichen bezeichnet. Der Lagerring der Figur 2 weist zwischen Lagerschulter 6 und Haltebord 8 einen Freiraum 11 aus, welcher hier als über die gesamte Breite der Lagerringschulter erstreckende Vertiefung ausgebildet ist. Die Tiefe T der Vertiefung ist in Figur 2 derart gewählt, dass sie in etwa gleich groß wie die Höhe H des Haltebordes 8 ausgebildet ist. Aufgrund der dadurch entstehenden freistehenden Ausgestaltung kann sich der Haltebord 8 während eines Induktionsverfahrens thermisch ausdehnen, so dass Spannungen im diesem Bereich reduziert werden können und eine Rissbildung vermieden werden kann. Somit ist es möglich die Lauffläche 4 und/oder den Führungsbord 10 induktiv zu härten, und die mit dem Induktionsverfahren einhergehenden Vorteile zu nutzen.

In Figur 2 weist die Lagerringschulter 6 einen ersten radialen Abstand R1 und die Vertiefung 12 einen zweiten radialen Abstand R2 zu einer Drehachse D des Lagerrings 2 auf, wobei im Unterschied zu Figur 1 die beiden Abstände R1 und R2 gleich sind, sodass auf eine zusätzliche Nut zwischen der Lagerringschulter 6 und dem Haltebord 8 verzichtet werden kann. Alternativ oder zusätzlich können am Fuß des Haltebordes 8 auf einer oder beiden Seiten Einstiche vorgesehen sein, womit die Übergänge von der Laufbahn zum Haltebord 8 und/oder von der Lagerringschulter 6 zum Haltebord 8 spannungsarm ausgebildet werden können. In diesem Fall unterscheiden sich die Abstände R1 und R2 um die Tiefe des Einstichs, jedoch bezüglich der Höhe H nur unwesentlich voneinander.

Während in Figur 1 die zylindrisch ausgebildete Lagerringschulter 6 einen Radius R1 aufweist, welcher im Wesentlichen gleich groß dem kleinsten Radius der Lauffläche 4 ist, ist der Radius R1 der Lagerringschulter des Lagerringes in der Figur 2 kleiner als der kleinste Radius der Lauffläche 4.

In beiden Figuren 1 und 2 ist jedoch der Haltebord 8 durch den Freiraum 11 als über seine gesamte Höhe H freistehender Haltebord ausgebildet. Erfindungsgemäß sind die Lagerringschultern 6 nicht gehärtet wohingegen die beanspruchten Oberflächen der Lauffläche 4 und des Führungsbordes 10 induktiv gehärtet sind. Durch den Induktivhärteprozess der Lauffläche 4 bis in den Bereich des Überganges von Lauffläche 4 zu Haltebord 8 kann es zweckmäßig sein den Haltebord 8 zumindest bereichsweise induktiv mitzuhärten, um die Randschichthärte der Lauffläche 4 über den gesamten Bereich gleichmäßig auszubilden. Somit kann es auf der der Lauffläche 4 gegenüber liegenden Seite des Haltebordes 8 einen Übergang von induktiv gehärteter Oberfläche zu nicht induktiv gehärteter Oberfläche geben.

### Bezugszeichenliste

- 2: Lagerring
- 4: Lauffläche
- 6: Lagerringschulter
- 8: Haltebord
- 10: Führungsbord
- 12: Vertiefung
- 11: Freiraum
- 14, 16: Vertiefungswand
- T: Tiefe der Vertiefung
- H: Höhe des Haltebords
- D: Drehachse
- R1, R2: radialer Abstand
- X: Unterschied zwischen den radialen Abständen
- B: Abstand Lagerringschulter - Bord

## Patentansprüche

1. Lagerring (2) eines Wälzlagers, der eine Lauffläche (4) für Wälzkörper und zumindest einen in eine Lagerringschulter (6) übergehenden Bord (8) zur Abstützung von Wälzkörpern aufweist, der sich mit einer Höhe (H) über die Lauffläche (4) erhebt, wobei der Lagerring (2) als Innenring eines Kegelrollenlagers ausgebildet und der Bord ein Haltebord (8) ist, und die Lagerringschulter (6) und die Lauffläche (4) einen Winkel zwischen 100 Grad und 150 Grad bilden,
**dadurch gekennzeichnet, dass** zwischen der Lagerringschulter (6) und dem Bord (8) ein Freiraum (11) ausgebildet ist, der so bemessen ist, dass der Bord über seine gesamte Höhe (H) freistehend ausgebildet ist.

2. Lagerring (2) nach Anspruch 1, wobei der Freiraum (11) als Vertiefung (12) ausgebildet ist, deren Tiefe (T) derart gewählt ist, dass der Bord über seine gesamte Höhe (H) freistehend ausgebildet ist.

3. Lagerring (2) nach Anspruch 2, wobei sich die Vertiefung (12) bis in einen Bereich unterhalb der Lauffläche (4) und der Lagerringschulter (6) erstreckt.

4. Lagerring (2) nach Anspruch 2 oder 3, wobei die Tiefe (T), senkrecht zu der Lauffläche (4) gemessen von einer tiefsten Stelle der Vertiefung (12) bis zu der maximalen Höhe (H) des Bords (8), mehr als das Eineinhalbfache, vorzugsweise mehr als das Doppelte der Höhe (H) beträgt.

5. Lagerring (2) nach Anspruch 2, **dadurch gekennzeichnet, dass** sich die Vertiefung (12) im Wesentlichen senkrecht zur Lauffläche (4) des Lagerrings (2) erstreckt.

6. Lagerring (2) nach einem der Ansprüche 2 oder 3, **dadurch gekennzeichnet, dass** die Vertiefung (12) eine erste und eine zweite Vertiefungswand (14; 16) aufweist, die im Wesentlichen parallel zueinander ausgebildet sind.

7. Lagerring (2) nach einem der vorherigen Ansprüche, **dadurch gekennzeichnet, dass** die Vertiefung (12) als umfängliche Nut ausgebildet ist.

8. Lagerring (2) nach Anspruch 1, **dadurch gekennzeichnet, dass** die Lagerringschulter (6) und die Lauffläche (4) einen Winkel zwischen 130 Grad und 140 Grad, bilden.

9. Lagerring (2) nach Anspruch 8, **dadurch gekennzeichnet, dass** der Lagerring (2) einen weiteren Bord (10) aufweist, welcher als Führungsbord (10) für Kegelrollen ausgebildet ist und dass die Lauffläche (4) und der Führungsbord (10) eine induktiv gehärtete Oberfläche aufweisen, wohingegen die Lagerringschulter (6) keine induktiv gehärtete Oberfläche aufweist.

10. Kegelrollenlager mit zumindest zwei Lagerringen (2) nach einem der vorherigen Ansprüche, wobei die Lagerringe als Innenringe ausgebildet sind und mit den Stirnseiten ihrer Lagerringschultern aneinander liegen.

## Claims

1. Bearing ring (2) of a rolling bearing, which bearing ring has a running surface (4) for rolling bodies and at least one flange (8), which transitions into a bearing ring shoulder (6), for supporting rolling bodies, which flange rises with a height (H) over the running surface (4), wherein the bearing ring (2) is designed as an inner ring of a tapered roller bearing, and the flange is a retaining flange (8), and the bearing ring shoulder (6) and the running surface (4) form an angle between 100 degrees and 150 degrees, **characterized in that** a clearance (11) is formed between the bearing ring shoulder (6) and the flange (8) and is dimensioned in such a way that the flange is designed to be free-standing over its entire height (H).

2. Bearing ring (2) according to Claim 1, wherein the clearance (11) takes the form of a depression (12) whose depth (T) is chosen in such a way that the flange is designed to be free-standing over its entire height (H).

3. Bearing ring (2) according to Claim 2, wherein the depression (12) extends into a region below the running surface (4) and the bearing ring shoulder (6) .

4. Bearing ring (2) according to Claim 2 or 3, wherein the depth (T), perpendicular to the running surface (4) measured from a lowest point of the depression (12) to the maximum height (H) of the flange (8), is more than one and a half times, preferably more than twice, the height (H).

5. Bearing ring (2) according to Claim 2, **characterized in that** the depression (12) extends substantially perpendicular to the running surface (4) of the bearing ring (2).

6. Bearing ring (2) according to either of Claims 2 and 3, **characterized in that** the depression (12) has a first and a second depression wall (14; 16) which are designed to be substantially parallel to one another.

7. Bearing ring (2) according to one of the preceding claims, **characterized in that** the depression (12) takes the form of a circumferential groove.

8. Bearing ring (2) according to Claim 1, **characterized in that** the bearing ring shoulder (6) and the running surface (4) form an angle between 130 degrees and 140 degrees.

9. Bearing ring (2) according to Claim 8, **characterized in that** the bearing ring (2) has a further flange (10) which takes the form of a guide flange (10) for tapered rollers, and **in that** the running surface (4) and the guide flange (10) have an inductively hardened surface, whereas the bearing ring shoulder (6) does not have an inductively hardened surface.

10. Tapered roller bearing having at least two bearing rings (2) according to one of the preceding claims, wherein the bearing rings take the form of inner rings and butt against one another by the end sides of their bearing ring shoulders.

## Revendications

1. Bague de palier (2) d'un palier à roulement, laquelle comporte une surface de roulement (4) destinée à des éléments roulants et au moins un bord (8) qui se transforme en un épaulement de bague de palier (6), qui est destiné à supporter des éléments roulants et qui s'élève à une hauteur (H) au-dessus de la surface de roulement (4), la bague de palier (2) étant conçue comme une bague intérieure d'un palier à rouleaux coniques et le bord étant un bord de retenue (8), et l'épaulement de bague de roulement (6) et la surface de roulement (4) formant un angle compris entre 100 degrés et 150 degrés,
**caractérisée en ce qu'**un espace libre (11) est formé entre l'épaulement de la bague de palier (6) et le bord (8) et est dimensionné de telle sorte que le bord soit libre sur toute sa hauteur (H).

2. Bague de palier (2) selon la revendication 1, l'espace libre (11) étant réalisé sous la forme d'un creux (12) dont la profondeur (T) est choisie de telle sorte que le bord soit libre sur toute sa hauteur (H).

3. Bague de palier (2) selon la revendication 2, le creux (12) s'étendant dans une zone située sous la surface de roulement (4) et l'épaulement de bague de palier (6).

4. Bague de palier (2) selon la revendication 2 ou 3, la profondeur (T), mesurée perpendiculairement à la surface de roulement (4) depuis un emplacement le plus profond du creux (12) jusqu'à la hauteur maximale (H) du bord (8), étant égale à plus d'une fois et demie, de préférence plus de deux fois, la hauteur (H).

5. Bague de palier (2) selon la revendication 2, **caractérisée en ce que** le creux (12) s'étend sensiblement perpendiculairement à la surface de roulement (4) de la bague de palier (2).

6. Bague de palier (2) selon l'une des revendications 2 et 3, **caractérisée en ce que** le creux (12) comporte une première et une deuxième paroi de creux (14 ; 16) qui sont formées sensiblement parallèlement l'une à l'autre.

7. Bague de palier (2) selon l'une des revendications précédentes, **caractérisée en ce que** le creux (12) est conçu comme une rainure circonférentielle.

8. Bague de palier (2) selon la revendication 1, **caractérisée en ce que** l'épaulement de bague de palier (6) et la surface de roulement (4) forment un angle compris entre 130 degrés et 140 degrés.

9. Bague de palier (2) selon la revendication 8, **caractérisée en ce que** la bague de palier (2) comporte un autre bord (10) qui est conçu comme un bord de guidage (10) destiné à des rouleaux coniques et **en ce que** la surface de roulement (4) et le bord de guidage (10) comportent une surface durcie par induction, tandis que l'épaulement de bague de palier (6) ne comporte pas de surface durcie par induction.

10. Palier à rouleaux coniques comprenant au moins deux bagues de palier (2) selon l'une des revendications précédentes, dans lequel les bagues de palier sont conçues comme des bagues intérieures et sont en appui l'une contre l'autre par les côtés frontaux de leurs épaulements de bague de palier.
